# EUROPÄISCHE PATENTSCHRIFT

(11) **EP 3 172 100 B1**
(45) Veröffentlichungstag und Bekanntmachung des Hinweises auf die Patenterteilung: **27.01.2021**
(21) Anmeldenummer: 15738901.6
(22) Anmeldetag: 16.07.2015
(51) Int. Cl.: B60T 8/40, B60T 13/66, B60T 13/74

(54) **HYDRAULISCHE KRAFTFAHRZEUG-BREMSANLAGE**
HYDRAULIC MOTOR VEHICLE BRAKE SYSTEM
SYSTÈME DE FREINAGE HYDRAULIQUE DE VÉHICULE AUTOMOBILE

(30) Priorität: 21.07.2014 DE 102014214100; 06.07.2015 DE 102015212552
(43) Veröffentlichungstag der Anmeldung: 31.05.2017
(73) Patentinhaber: Continental Teves AG & Co. OHG, 60488 Frankfurt am Main (DE)
(72) Erfinder: BESIER, Marco, 65307 Bad Schwalbach (DE); DRUMM, Stefan, 55291 Saulheim (DE); JUNGBECKER, Johann, 55576 Badenheim (DE); LINHOFF, Paul, 61267 Neu-Anspach (DE); ROLL, Georg, 60438 Frankfurt (DE)
(86) Internationale Anmeldenummer: PCT/EP2015/066231
(87) Internationale Veröffentlichungsnummer: WO 2016/012331

(56) Entgegenhaltungen:
- WO-A1-91/05686
- WO-A1-2012/156125
- WO-A1-2014/045382
- DE-A1- 10 053 993
- DE-A1- 19 703 776
- DE-A1-102006 022 734
- DE-A1-102012 205 860
- DE-A1-102012 205 862
- DE-A1-102012 205 962
- DE-A1-102012 210 809
- DE-A1-102013 203 594
- US-A1- 2004 262 993

## Beschreibung

Die Erfindung betrifft eine hydraulische Kraftfahrzeug-Bremsanlage gemäß dem Oberbegriff von Anspruch 1.

Aus der internationalen Patentanmeldung WO 2012/150120 A1 ist eine hydraulische Kraftfahrzeugbremsanlage bekannt mit einem Bremspedal-betätigbaren Tandemhauptbremszylinder, einer elektrisch steuerbaren Druckmodulationseinrichtung zum Einstellen radindividueller Bremsdrücke und einer elektronisch steuerbaren Druckbereitstellungseinrichtung (Pumpen-Ventil-Modul) mit vier von einem Elektromotor angetriebenen Pumpen. Dabei sind zwei der Pumpen saugseitig mit einem Druckmittelvorratsbehälter verbunden und die anderen zwei Pumpen sind saugseitig an den Tandemhauptbremszylinder angeschlossen. Je nach Betriebszustand ist es notwendig, entweder aus dem Tandemhauptbremszylinder oder aus dem Druckmittelvorratsbehälter Druckmittelvolumen anzusaugen. Um die Volumenströme zu steuern, werden in dem Pumpen-Ventil-Modul der vorbekannten Kraftfahrzeugbremsanlage pro Bremskreis zwei Pumpen und zwei analoge Elektromagnetventile benötigt. Diese müssen in vergleichsweise aufwendiger Weise mittels einer geschlossenen elektronischen Regelschleife auf Grund von Drucksensorsignalen angesteuert werden. Außerdem ist es nachteilig, dass pro Bremskreis zwei Pumpen und zwei analoge Elektromagnetventile vorgesehen sind. Weiterhin ist es nachteilig, dass die an den Druckmittelvorratsbehälter angeschlossenen Pumpen im Betrieb ständig gegen den Systemdruck fördern müssen. Hydraulisch ist es in der vorbekannten Bremsanlage nicht möglich, die an den Druckmittelvorratsbehälter angeschlossenen Pumpen in einen Zustand des drucklosen Umförderns zu schalten.

Weitere derartige Bremsanlagen sind aus den DE 10 2012 205 860 A1, DE 10 2013 203 594 A1 und DE 100 53 993 A1 bekannt.

Es ist daher eine Aufgabe der vorliegenden Erfindung, eine kostengünstigere und einfacher aufgebaute Anordnung für eine hydraulische Kraftfahrzeug-Bremsanlage sowie eine Bremsanlage mit einer solchen Anordnung bereitzustellen, welche die genannten Nachteile beseitigt.

Diese Aufgabe wird erfindungsgemäß durch eine Bremsanlage gemäß Anspruch 1 gelöst.

Die Erfindung bietet den Vorteil, dass nur eine Pumpe pro Bremskreis der Bremsanlage benötigt wird. Ein Steuern der Saugvolumenströme erfordert daher wenig Aufwand. Die Zusammensetzung des Pumpensaugvolumenstroms aus einem Anteil von dem Eingangsdruckanschluss und einem Anteil von dem Behälteranschluss stellt sich automatisch ein, ohne dass hierzu eine elektronische Regelung zur Ansteuerung von Analogventilen notwendig ist. Zusätzliche analoge Elektromagnetventile werden daher hierfür nicht benötigt. Mit einem geringen Hydraulikaufwand der Verwendung eines Rückschlagventils wird erreicht, dass automatisch nur dann aus dem Behälteranschluss Druckmittelvolumen angesaugt wird, wenn der Eingangsdruckanschluss einen im Verhältnis zum Pumpenvolumenstrom zu geringen Volumenstrom liefert.

Bevorzugt ist die Volumenabgabeseite des (ersten) Rückschlagventils mit der hydraulischen Verbindung zwischen der Saugseite und dem Eingangsdruckanschluss verbunden. Das bedeutet, dass die Volumenabgabeseite des Rückschlagventils ist mit der Saugseite und dem Eingangsdruckanschluss verbunden. Die Saugseite ist also an einen Verbindungsabschnitt angeschlossen, welcher von dem Eingangsdruckanschluss und dem Behälteranschluss mit Druckmittel versorgt werden kann.

Um den Ansaugwiderstand für die Pumpe möglichst gering zu halten, ist bevorzugt in der hydraulischen Verbindung zwischen der Saugseite und dem Eingangsdruckanschluss kein Ventil angeordnet.

Gemäß einer anderen bevorzugten Ausführungsform der Bremsanlage ist in der hydraulischen Verbindung zwischen der Saugseite und dem Eingangsdruckanschluss ein stromlos geschlossen ausgeführtes, zweites Ventil angeordnet. Dieses ermöglicht es, einen Druckmittelstrom vom Eingangsdruckanschluss zur Saugseite bedarfsweise abzusperren oder zu ermöglichen. Mittels des zweiten Ventils wird es möglich, dass Druckmittel auch ausschließlich über den Behälteranschluss von der Pumpe angesaugt wird. Besonders bevorzugt ist jedoch in der hydraulischen Verbindung lediglich das zweite Ventil, d.h. kein weiteres Ventil, angeordnet.

Gemäß einer bevorzugten Weiterbildung der Bremsanlage ist eine hydraulische Verbindung zwischen dem Ausgangsdruckanschluss und dem Behälteranschluss vorgesehen, in welcher ein stromlos geschlossen ausgeführtes, drittes Ventil angeordnet ist. Bevorzugt ist der Pumpe und dem ersten Rückschlagventil ein stromlos geschlossen ausgeführtes, drittes Ventil parallel geschaltet. Mittels des dritten Ventils wird es möglich, einen Druck am Ausgangsdruckanschluss (z.B. an der Radbremse) direkt zum Behälteranschluss (z.B. zum Druckmittelvorratsbehälter) abzubauen.

Bevorzugt ist eine, ggf. weitere, hydraulische Verbindung zwischen dem Ausgangsdruckanschluss und dem Behälteranschluss vorgesehen, in welcher ein in Richtung des Ausgangsdruckanschlusses hin öffnendes, weiteres (zweites) Rückschlagventil angeordnet ist. Bevorzugt ist der Pumpe und dem ersten Rückschlagventil ein in Richtung des Ausgangsdruckanschlusses hin öffnendes zweites Rückschlagventil parallel geschaltet. Besonders bevorzugt sind die Pumpe mit dem ersten Rückschlagventil, das dritte Ventil und das zweite Rückschlagventil jeweils zueinander parallel geschaltet. Die weitere hydraulische Verbindung mit dem zweiten Rückschlagventil ermöglicht einen Druckmittelfluss vom Behälteranschluss zum Druckausgangsanschluss mit geringem hydraulischem Widerstand. Dies ist besonders vorteilhaft in einer Bremsanlage, bei welcher die Anordnung (ein erfindungsgemäßes Pumpen-Ventil-Modul) zwischen einem Hauptbremszylinder und einer zweiten Druckbereitstellungseinrichtung (insbesondere einem zweiten Pumpen-Ventil-Modul) angeordnet ist.

Gemäß einer bevorzugten Ausführungsform der Bremsanlage ist die Anordnung mehrkreisig, d.h. zumindest zweikreisig, ausgeführt. Für jeden Kreis umfasst die Anordnung einen Eingangsdruckanschluss, einen Ausgangsdruckanschluss, eine Pumpe mit einer Saugseite, welche mit dem Eingangsdruckanschluss verbunden oder verbindbar ist, und einer Druckseite, welche mit dem Ausgangsdruckanschluss verbunden oder verbindbar ist, und ein zwischen Eingangsdruckanschluss und Ausgangsdruckanschluss angeordnetes, stromlos offen ausgeführtes, analog ansteuerbares, erstes Ventil. Jeder Kreis der Anordnung kann so einem Bremskreis einer, z.B. üblicherweise zweikreisigen, Bremsanlage zugeordnet sein. Jeder Kreis der Anordnung kann auch einem Radbremskreis einer Bremsanlage zugeordnet sein.

Bevorzugt werden die Pumpen durch einen Elektromotor gemeinsam angetrieben.

Gemäß einer bevorzugten Ausführungsform der Bremsanlage umfasst die Anordnung lediglich den einen Behälteranschluss, wobei die Saugseiten der Pumpen mit dem Behälteranschluss verbunden sind. Durch nur einen Behälteranschluss (für alle Kreise) wird der Aufwand zur hydraulischen Montage der Anordnung in einer Bremsanlage reduziert.

Bei nur einem Behälteranschluss umfasst die Anordnung der Bremsanlage bevorzugt für jeden Kreis ein zwischen Saugseite der Pumpe und dem Behälteranschluss angeordnetes erstes Rückschlagventil.

Alternativ sind bevorzugt zwei oder mehr Saugseiten gemeinsam über ein erstes Rückschlagventil mit dem Behälteranschluss verbunden. Hierdurch wird die Anzahl von ersten Rückschlagventilen, und damit die Kosten, reduziert.

Gemäß einer anderen bevorzugten Ausführungsform der Bremsanlage umfasst die Anordnung für jeden Kreis einen separaten Behälteranschluss sowie für jeden Kreis ein zwischen der Saugseite der Pumpe und dem Behälteranschluss angeordnetes erstes Rückschlagventil. Diese Ausführungsform ist vorteilhaft für eine durchgängig zwei- oder mehrkreisige Bremsanlage. Die Behälteranschlüsse der Anordnung sind dann besonders bevorzugt jeweils mit der dem entsprechenden Bremskreis der Bremsanlage zugeordneten (jeweiligen) Kammer des Druckmittelvorratsbehälters verbunden.

Gemäß einer anderen bevorzugten Ausführungsform der Bremsanlage umfasst die Anordnung zumindest zwei Behälteranschlüsse, wobei zumindest einer, vorteilhafterweise jeder, der Behälteranschlüsse mit den Saugseiten von zumindest zwei Pumpen verbunden ist. Es ist dabei vorteilhafterweise je Saugseite ein zwischen der Saugseite der Pumpe und dem zugeordneten Behälteranschluss angeordnetes erstes Rückschlagventil vorgesehen, oder es ist je Behälteranschluss ein zwischen der Saugseite der Pumpe und dem Behälteranschluss angeordnetes erstes Rückschlagventil vorgesehen, d.h. zwei oder mehr Saugseiten sind gemeinsam über ein erstes Rückschlagventil mit dem Behälteranschluss verbunden.

Bei einer mehrkreisigen Anordnung ist bevorzugt je Kreis in der hydraulischen Verbindung zwischen der Saugseite und dem Eingangsdruckanschluss kein Ventil angeordnet.

Bei einer mehrkreisigen Anordnung ist bevorzugt je Kreis in der hydraulischen Verbindung zwischen der Saugseite und dem Eingangsdruckanschluss, insbesondere lediglich, ein stromlos geschlossen ausgeführtes zweites Ventil (7) angeordnet.

Bei einer mehrkreisigen Anordnung ist bevorzugt je Kreis eine hydraulische Verbindung zwischen dem Ausgangsdruckanschluss und dem (zugeordneten) Behälteranschluss vorgesehen, in welcher ein stromlos geschlossen ausgeführtes, drittes Ventil angeordnet ist.

Bei einer mehrkreisigen Anordnung ist bevorzugt je Kreis eine weitere hydraulische Verbindung zwischen dem Ausgangsdruckanschluss und dem (zugeordneten) Behälteranschluss vorgesehen, in welcher ein in Richtung des Ausgangsdruckanschlusses hin öffnendes Rückschlagventil angeordnet ist.

Bevorzugt umfasst die Anordnung der Bremsanlage zumindest eine erste Druckerfassungseinrichtung, welche den Druck an dem Eingangsdruckanschluss oder einem der Eingangsdruckanschlüsse erfasst. Besonders bevorzugt umfasst die Anordnung weiterhin eine zweite Druckerfassungseinrichtung, welche den Druck an dem Ausgangsdruckanschluss oder einem der Ausgangsdruckanschlüsse erfasst.

Bevorzugt sind die hydraulischen Komponenten der Anordnung der Bremsanlage als eine selbständige Baugruppe, ein sogenanntes Pumpen-Ventil-Modul, ausgeführt. Der Anordnung bzw. dem Pumpen-Ventil-Modul ist bevorzugt eine elektronische Steuer- und Regeleinheit zugeordnet. Diese ist besonders bevorzugt an der Baugruppe angeordnet.

Die Bremsanlage umfasst hydraulisch betätigbare Radbremsen, einen bremspedalbetätigbaren Hauptbremszylinder mit Druckräumen, wobei jedem Druckraum zumindest eine der Radbremsen zugeordnet ist, einen dem Hauptbremszylinder zugeordneten unter Atmosphärendruck stehenden Druckmittelvorratsbehälter, eine elektrisch steuerbare Druckmodulationseinrichtung zum Einstellen radindividueller Bremsdrücke mit zumindest einem Einlassventil, und vorteilhafterweise einem Auslassventil, je Radbremse, und eine elektrisch steuerbare Druckbereitstellungseinrichtung, sowie eine erfindungsgemäße Anordnung.

Gemäß einer bevorzugten Ausführungsform der Bremsanlage ist die Anordnung (oder das Pumpen-Ventil-Modul) hydraulisch zwischen dem Hauptbremszylinder und der elektrisch steuerbaren Druckbereitstellungseinrichtung angeordnet.

Die elektrisch steuerbare Druckbereitstellungseinrichtung ist besonders bevorzugt als ein zweites Pumpen-Ventil-Modul ausgeführt. Besonders bevorzugt umfasst die Druckbereitstellungseinrichtung eine Pumpe und Ventile, und vorteilhafterweise einen Niederdruckspeicher.

Bevorzugt stellen die Druckbereitstellungseinrichtung und die ihr nachgeschaltete Druckmodulationseinrichtung zusammen ein, an sich bekanntes, Pumpen-Ventil-Modul (ESC-Modul, ESC: Electronic Stability Control) dar.

Bevorzugt ist der oder jeder Eingangsdruckanschluss der Anordnung ist, besonders bevorzugt ohne Zwischenschaltung eines Ventils, mit dem Hauptbremszylinder (100) verbunden, und der oder jeder Ausgangsdruckanschluss der Anordnung mit der Druckbereitstellungseinrichtung verbunden.

Bevorzugt umfasst die Anordnung der Bremsanlage je Bremskreis (Druckraum des Hauptbremszylinders) einen Kreis, wobei je Kreis der Anordnung eine hydraulische Verbindung zwischen dem Ausgangsdruckanschluss und dem Behälteranschluss vorgesehen ist, in welcher ein in Richtung des Ausgangsdruckanschlusses hin öffnendes, zweites Rückschlagventil angeordnet ist.

Gemäß einer anderen bevorzugten Ausführungsform der Bremsanlage ist die Anordnung (oder das Pumpen-Ventil-Modul) hydraulisch zwischen der Druckmodulationseinrichtung und den Radbremsen angeordnet.

Der Druckmodulationseinrichtung ist bevorzugt die elektrisch steuerbare Druckbereitstellungseinrichtung vorgeschaltet.

Bevorzugt ist der oder jeder Eingangsdruckanschluss der Anordnung, vorteilhafterweise ohne Zwischenschaltung eines Ventils, mit der Druckmodulationseinrichtung verbunden, und der oder jeder Ausgangsdruckanschluss der Anordnung, vorteilhafterweise ohne Zwischenschaltung eines Ventils, mit einer der Radbremsen verbunden.

Besonders bevorzugt ist jeder Eingangsdruckanschluss der Anordnung direkt mit einem der Einlassventile der Druckmodulationseinrichtung verbunden.

Die Druckbereitstellungseinrichtung wird bevorzugt durch eine Zylinder-Kolben-Anordnung gebildet, deren Kolben durch einen elektromechanischen Aktuator betätigbar ist.

Um eine hohe Verfügbarkeit für den elektrisch gesteuerten Aufbau von Bremsdruck bereitstellen zu können, umfasst die Bremsanlage bevorzugt eine erste, der Druckbereitstellungseinrichtung und der Druckmodulationseinrichtung zugeordnete elektronische Steuer- und Regeleinheit und eine zweite, der Anordnung zugeordnete elektronische Steuer- und Regeleinheit.

Bevorzugt ist die Bremsanlage in einer "Brake-by-wire"-Betriebsart sowohl vom Fahrzeugführer als auch unabhängig vom Fahrzeugführer ansteuerbar.

Weitere bevorzugte Ausführungsformen der Erfindung ergeben sich aus den Unteransprüchen und der nachfolgenden Beschreibung anhand von Figuren.

Es zeigen
- Fig. 1: ein erstes Ausführungsbeispiel einer erfindungsgemäßen Anordnung,
- Fig. 2: ein zweites Ausführungsbeispiel einer erfindungsgemäßen Anordnung,
- Fig. 3: ein drittes Ausführungsbeispiel einer erfindungsgemäßen Anordnung,
- Fig. 4: ein viertes Ausführungsbeispiel einer erfindungsgemäßen Anordnung,
- Fig. 5: ein fünftes Ausführungsbeispiel einer erfindungsgemäßen Anordnung,
- Fig. 6: ein sechstes Ausführungsbeispiel einer erfindungsgemäßen Anordnung,
- Fig. 7: ein erstes Ausführungsbeispiel einer erfindungsgemäßen Bremsanlage,
- Fig. 8: ein siebtes Ausführungsbeispiel einer erfindungsgemäßen Anordnung, und
- Fig. 9: ein zweites Ausführungsbeispiel einer erfindungsgemäßen Bremsanlage.

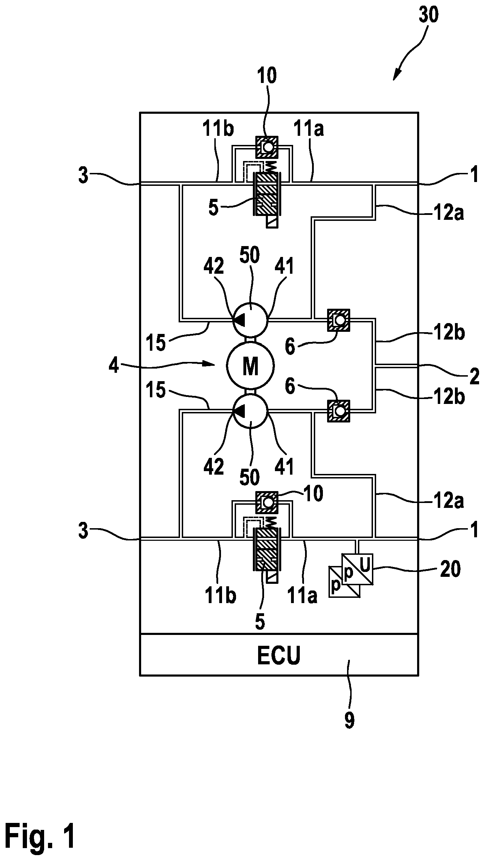

Anhand der Fig. 1 bis 6 und 8 werden Ausführungsbeispiele von erfindungsgemäßen Anordnungen (Pumpen-Ventil-Module) 30 beschrieben, welche bevorzugt als Ergänzung zu einem Hauptbremssystem genutzt werden, welches bereits eine elektrisch ansteuerbare Druckbereitstellungseinrichtung (Druckerzeuger) besitzt.

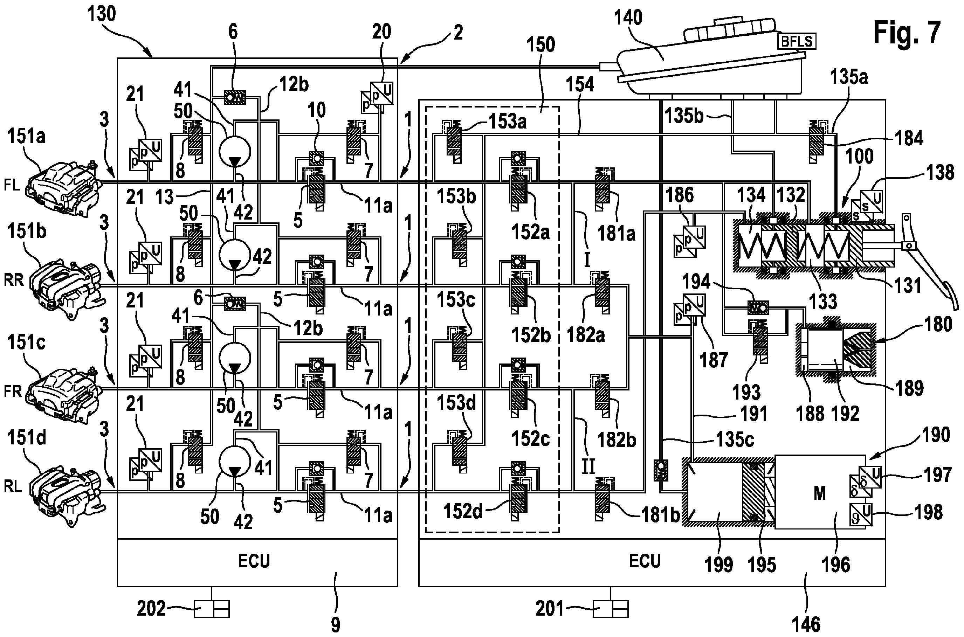

Die beispielsgemäßen Anordnungen (Pumpen-Ventil-Module) 30 werden bevorzugt einem Hauptbremssystem nachgeschaltet. Dies bietet den Vorteil, dass das Druckmittel direkt aus dem Behälter angesaugt wird. Ein Ansaugen durch das Hauptbremssystem könnte wegen dessen Strömungswiderständen zu nicht ausreichenden Volumenströmen führen. Besonders bevorzugt ist die Anordnung den Einlassventilen des Hauptbremssystems nachgeschaltet (siehe z.B. Fig. 7).

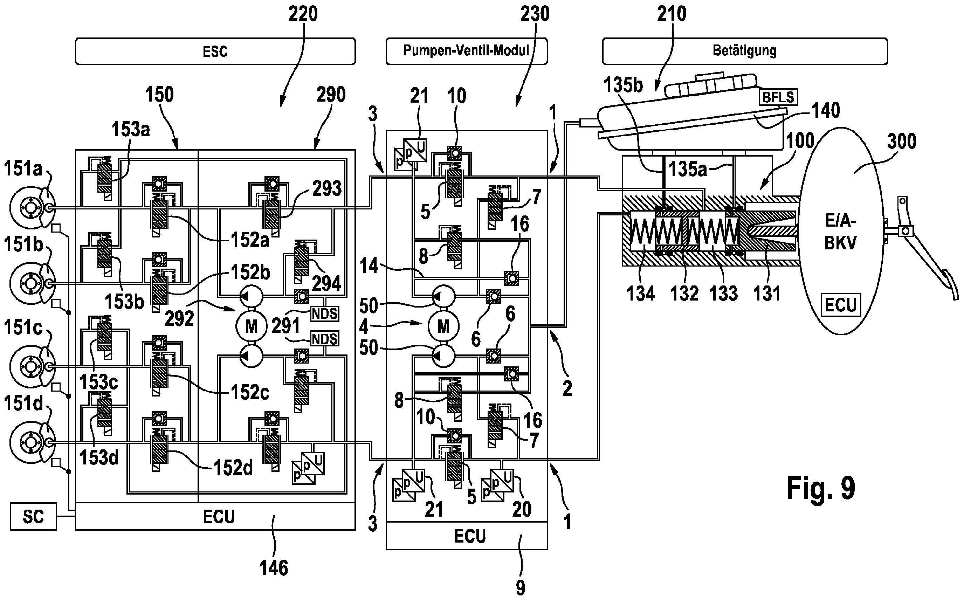

Es ist auch bevorzugt, dass die beispielsgemäßen Anordnungen (Pumpen-Ventil-Module) 30 zwischen dem Hauptbremszylinder und den Einlassventilen der Radbremsen angeordnet sind (siehe z.B. Fig. 9).

Die beispielsgemäßen Anordnungen umfassen für eine Redundanz der Bremsanlage eine eigene elektronische Steuer- und Regeleinheit 9 und eine Pumpenanordnung 4, 40 (zweiter elektrisch ansteuerbarer Druckerzeuger für die Bremsanlage), so dass in der gesamten Bremsanlage zwei unabhängige elektronische Steuer- und Regeleinheiten und zwei unabhängige Druckerzeuger vorhanden sind.

Beispielsgemäß umfassen die Anordnungen 30 eine Hydraulikeinheit (HCU), eine Elektronikeinheit 9 (ECU, elektronische Steuer- und Regeleinheit), mindestens einen Drucksensor 20, einen Motor M zum Antrieb von Pumpen 50 sowie pro Kreis der Anordnung ein stromlos offenes Analogventil 5.

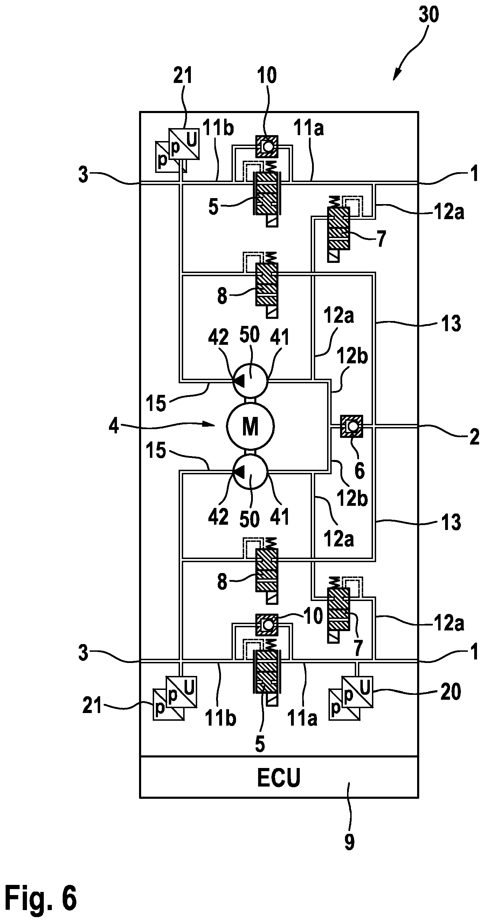

Die beispielsgemäßen Anordnungen 30 der Fig. 1 bis 5 und 8 umfassen pro Kreis ein Rückschlagventil 6. Die beispielsgemäße Anordnung 30 der Fig. 6 umfasst pro Behälteranschluss ein Rückschlagventil 6.

Bevorzugt werden für das oder die Rückschlagventile 6 Rückschlagventile mit einem sehr geringen Öffnungsdruck und minimaler Restleckage verwendet. Hierzu sind besonders Rückschlagventile mit Elastomer abgedichtetem Ventilsitz geeignet. Ventile dieser Bauart haben sich bereits als Zentralventile in Hauptbremszylindern bewährt.

In Fig. 1 ist ein erstes Ausführungsbeispiel einer erfindungsgemäßen Anordnung 30 für eine hydraulische Kraftfahrzeug-Bremsanlage dargestellt. Die Anordnung ist zweikreisig ausgelegt. Je Kreis umfasst die Anordnung einen ersten Anschluss 1 (Eingangsdruckanschluss, Druckeingang), z.B. zur Verbindung mit einer nicht dargestellten Druckquelle, einen dritten Anschluss 3 (Ausgangsdruckanschluss, Druckabgang), z.B. zur Verbindung mit einer nicht dargestellten Radbremse, eine Pumpe 50 mit einer Saugseite 41 und einer Druckseite 42, und ein zwischen Eingangsdruckanschluss 1 und Ausgangsdruckanschluss 3 angeordnetes, elektrisch betätigbares Ventil 5. Die Anordnung umfasst einen (einzigen) zweiten Anschluss 2 (Behälteranschluss) zur Verbindung mit einem nicht dargestellten Druckmittelbehälter oder Druckmittelvorratsbehälter. Hierzu sind die Saugseiten der Pumpen über Leitungsabschnitte 12b zusammengeschaltet und gemeinsam mit dem Behälteranschluss 2 verbunden.

Die Druckquelle wird bevorzugt durch einen Hauptbremszylinder gebildet. Vorteilhafterweise ist jeder Druckraum des Hauptbremszylinders mit einem der Eingangsdruckanschlüsse 1 verbunden bzw. verbindbar.

Zwischen Hauptbremszylinder und Anordnung können weitere Ventile, z.B. Druckmodulationsventile, angeordnet sein.

Bei dem Druckmittelvorratsbehälter handelt es sich vorteilhafterweise um einen unter Atmosphärendruck stehenden Druckmittelvorratsbehälter, welcher z.B. dem Hauptbremszylinder zugeordnet ist.

Bevorzugt umfasst der Druckmittelvorratsbehälter eine dritte Kammer, aus der das im Betrieb angesaugte Druckmittelvolumen für die Anordnung 30 bereitgestellt wird.

Die beispielgemäße zweikreisige Anordnung 30 umfasst also eine Pumpenanordnung 4 mit zwei Pumpen 50, d.h. eine einzelne Pumpe 50 je Kreis. Die zwei Pumpen 50 der Pumpenanordnung 4 werden von einem Elektromotor M gemeinsam angetrieben. Jede Pumpe 50 umfasst eine Saugseite 41 und eine Druckseite 42. Um Folgenden wird einer der Kreise der Anordnung beschrieben, der andere Kreis ist entsprechend aufgebaut.

Das (erste) Ventil 5, welches stromlos offen und analog ansteuerbar ausgeführt ist, ist in einer hydraulischen Verbindung 11 zwischen dem Eingangsdruckanschluss 1 und dem Ausgangsdruckanschluss 3 mit einem (Eingangsdruckanschluss-seitigen) Leitungsabschnitt 11a und einem (Ausgangsdruckanschluss-seitigen) Leitungsabschnitt 11b angeordnet. Dem Ventil 5 ist ein in Richtung des Ausgangsdruckanschlusses 3 öffnendes Rückschlagventil 10 parallel geschaltet.

Die Druckseite 42 der Pumpe 50 ist über einen Leitungsabschnitt 15 mit dem zugehörigen Leitungsabschnitt 11b und somit dem zugehörigen Ausgangsdruckanschluss 3 verbunden.

Die Saugseite 41 der Pumpe 50 ist über einen Leitungsabschnitt 12a mit dem zugehörigen Eingangsdruckanschluss 1 verbunden. Die Saugseite 41 ist beispielsgemäß direkt, d.h. ohne Zwischenschaltung eines Ventils, mit dem Eingangsdruckanschluss 1 verbunden.

Zusätzlich ist die Saugseite 41 der Pumpe 50 über eine hydraulische Verbindung (Teil des Leitungsabschnitts 12a und Leitungsabschnitt 12b) mit dem Behälteranschluss 2 verbunden. In der hydraulischen Verbindung (zwischen Leitungsabschnitt 12a und 12b) ist ein in Richtung der Saugseite 41 der Pumpe 50 hin öffnendes Rückschlagventil 6 angeordnet. Die Volumenabgabeseite des Rückschlagventils 6 ist mit der hydraulischen Verbindung 12a zwischen der Saugseite 41 und dem Eingangsdruckanschluss 1 verbunden. Somit ist die Volumenabgabeseite des Rückschlagventils 6 mit der Saugseite 41 und dem Eingangsdruckanschluss 1 verbunden. Daher kann die Saugseite 41 der Pumpe 50 mit Druckmittel von dem Eingangsdruckanschluss 1 und mit Druckmittel von dem Behälteranschluss 2 versorgt werden. In der hydraulischen Verbindung zwischen Saugseite 41 und zweitem Anschluss 2 ist neben dem Rückschlagventil 6 kein weiteres Ventil angeordnet.

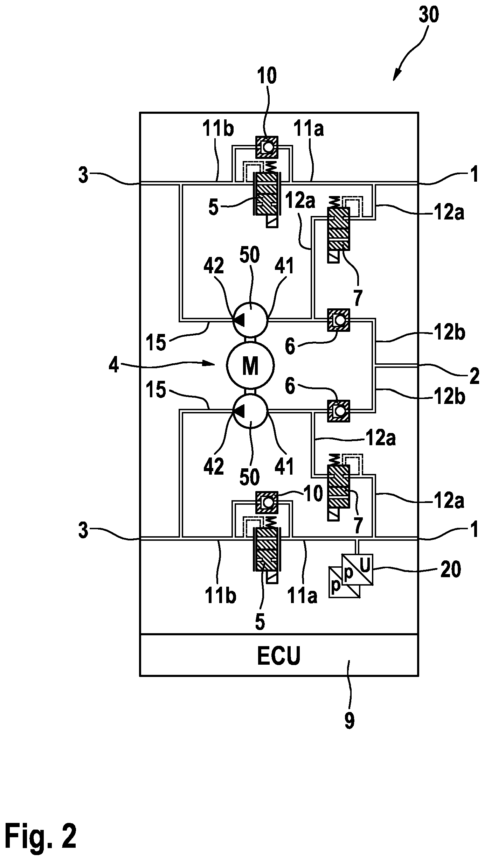

Das in Fig. 2 dargestellte zweite Ausführungsbeispiel einer erfindungsgemäßen Anordnung entspricht dem ersten Ausführungsbeispiel der Fig. 1, wobei zusätzlich ein in der Verbindung 12a angeordnetes, stromlos geschlossenes (zweites) Ventil 7 pro Kreis vorgesehen ist. Ventil 7 sperrt im unbestromten Zustand den Druckmittelvolumenstrom vom Eingangsdruckanschluss 1 zur Pumpensaugseite 41 ab. Bei geschlossenem Ventil 7 versorgt sich die Pumpe 50 über den Behälteranschluss 2. Bei geöffnetem Ventil 7 kann auch Druckmittelvolumen vom Eingangsdruckanschluss 1 angesaugt werden. Bietet der Eingangsdruckanschluss 1 keinen ausreichenden Volumenstrom, so saugt die Pumpe 50 das zusätzlich benötigte Druckmittelvolumen aus dem Behälteranschluss 2.

Gemäß dem ersten und zweiten Ausführungsbeispiel ist ein einziger Drucksensor (Druckerfassungseinrichtung) 20 vorgesehen, welcher den Druck an einem der Eingangsdruckanschlüsse 1 erfasst.

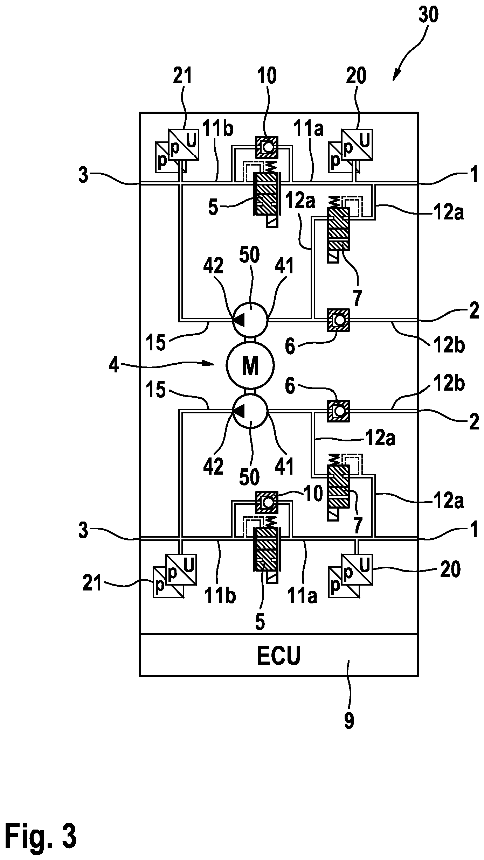

In Fig. 3 ist ein drittes Ausführungsbeispiel einer erfindungsgemäßen Anordnung dargestellt, dessen hydraulischer Aufbau grundsätzlich dem des zweiten Ausführungsbeispiels entspricht. Allerdings umfasst die Anordnung je Kreis einen unabhängigen Behälteranschluss 2, d.h. insgesamt zwei Behälteranschlüsse 2. Je Kreis umfasst die Anordnung also einen Eingangsdruckanschluss, einen Behälteranschluss 2, einen Ausgangsdruckanschluss 3, eine Pumpe 50 mit einer Saugseite 41, die über Leitungsabschnitt 12a (mit Ventil 7) mit dem Eingangsdruckanschluss 1 verbunden ist, und einer Druckseite 42, welche über Leitungsabschnitte 15 und 11b mit dem Ausgangsdruckanschluss 3 verbunden ist, ein in der hydraulischen Verbindung 11 zwischen Eingangsdruckanschluss 1 und Ausgangsdruckanschluss 3 angeordnetes, elektrisch betätigbares Ventil 5 (mit parallel geschaltetem Rückschlagventil 10), und ein in der Verbindung 12a, 12b zwischen Saugseite 41 und Behälteranschluss 2 angeordnetes, in Richtung der Saugseite 41 öffnendes, Rückschlagventil 6.

Dieses Ausführungsbeispiel kommt vorteilhafterweise in durchgängig zweikreisigen Bremsanlagen zur Anwendung. Die Behälteranschlüsse 2 sind in der Bremsanlage entsprechend der (Brems)Kreisaufteilung mit der jeweiligen Behälterkammer verbunden.

Gemäß dem dritten Ausführungsbeispiel sind je Kreis ein Drucksensor 20, welcher den Druck an dem jeweiligen Eingangsdruckanschluss 1 erfasst, und ein Drucksensor 21, welcher den Druck an dem jeweiligen Ausgangsdruckanschluss 3 erfasst, vorgesehen.

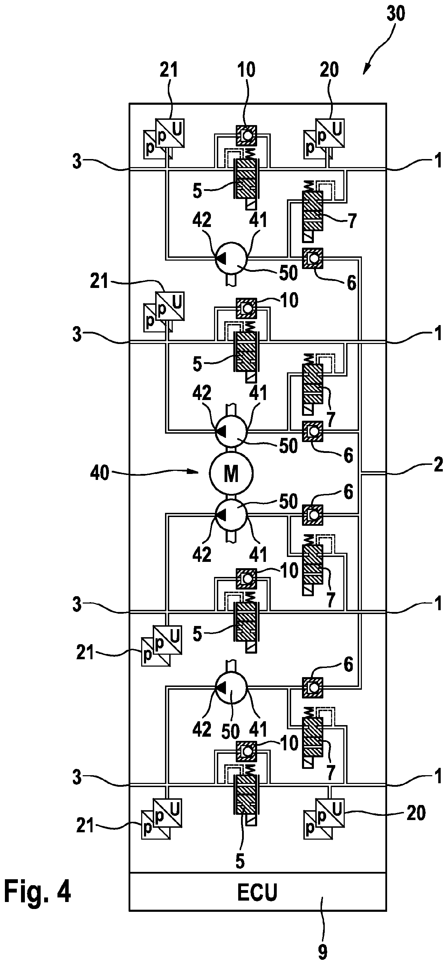

In Fig. 4 ist ein viertes Ausführungsbeispiel einer erfindungsgemäßen Anordnung dargestellt. Dieses ist vierkreisig ausgeführt mit einem Eingangsdruckanschluss 1, einem Ausgangsdruckanschluss 3, einer Pumpe 50 mit Saugseite 41 und Druckseite 42 und einem zwischen Eingangsdruckanschluss 1 und Ausgangsdruckanschluss 3 angeordneten, stromlos offen ausgeführten, analog ansteuerbaren Ventil 5 je Kreis. D.h. die Anordnung besitzt vier Druckeingänge 1, vier Druckabgänge 3 und vier Pumpen 50. Die Anordnung besitzt einen gemeinsamen Behälteranschluss 2 für die vier Kreise. In jedem Kreis ist (zwischen Leitungsabschnitt 12a und 12b) ein Rückschlagventil 6 vorgesehen. Die vier Leitungsabschnitte 12b sind zusammengeschaltet und mit dem Behälteranschluss 2 verbunden. Der grundsätzliche hydraulische Aufbau eines Kreises entspricht im Übrigen dem des zweiten Ausführungsbeispiels (Fig. 2).

Eine vierkreisige Anordnung kann analog zu Fig. 1 ohne Ventil 7 je Kreis oder analog zu Fig.2 (wie in Fig. 4 dargestellt) mit Ventil 7 je Kreis ausgeführt sein.

Eine vierkreisige Anordnung analog zu Fig. 3 mit zwei Behälteranschlüssen 2, wobei jeder der Behälteranschlüsse mit den Saugseiten von zwei Pumpen verbunden ist, oder mit vier Behälteranschlüssen 2, d.h. einem separaten Behälteranschluss 2 je Kreis, ist ebenfalls vorteilhaft.

Gemäß dem vierten Ausführungsbeispiel ist je Kreis ein Drucksensor 21 vorgesehen, welcher den Druck an dem jeweiligen Ausgangsdruckanschluss 3 erfasst. An zwei der vier Eingangsdruckanschlüssen 1 wird der Druck mittels eines Drucksensors 20 erfasst.

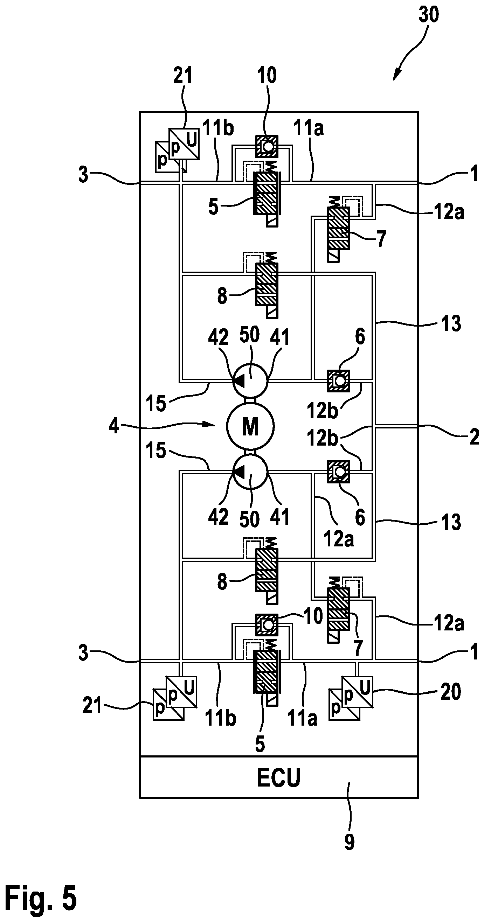

In Fig. 5 ist ein fünftes Ausführungsbeispiel einer erfindungsgemäßen Anordnung dargestellt, dessen hydraulischer Aufbau grundsätzlich dem des zweiten Ausführungsbeispiels entspricht. Allerdings umfasst die Anordnung zusätzlich je Kreis eine hydraulische Verbindung 13 zwischen dem Behälteranschluss 2 und dem Ausgangsdruckanschluss 3, in der ein stromlos geschlossenes Ventil 8 angeordnet ist. D.h. das Ventil 8 ist der Pumpe 50 und dem Rückschlagventil 6 parallel geschaltet. Über das Auslassventil 8 kann Druck direkt zum Behälteranschluss 2 abgebaut werden. Dies ist vorteilhaft gegenüber einem Druckabbau durch das Analogventil 5 über den Eingangsdruckanschluss 1 und anschließend durch ein vorgeschaltetes (Haupt)Bremssystem. Beim Druckabbau durch das vorgeschaltete Bremssystem müssen ggf. erhebliche hydraulische Widerstände durchströmt werden, was zu einer starken Drosselwirkung für den Volumenstrom des Druckabbaus führen kann. Bei einer ABS-Bremsung (Antiblockier-Bremsung) könnte dies zu Problemen führen, wenn der Druck nicht schnell genug abgebaut werden kann. Daher ist ein derart angeordnetes Ventil 8, welches direkt den Druck über nur diese eine Ventilblende zum Behälter ablassen kann, vorteilhaft.

Gemäß dem fünften Ausführungsbeispiel ist je Kreis ein Drucksensor 21 vorgesehen, welcher den Druck an dem jeweiligen Ausgangsdruckanschluss 3 erfasst. An einem der Eingangsdruckanschlüssen 1 wird der Druck mittels eines Drucksensors 20 erfasst.

Eine alternative Anordnung des Rückschlagventils 6 soll anhand des sechsten Ausführungsbeispiels der Fig. 6 erläutert werden. Das sechste Ausführungsbeispiel basiert auf dem grundsätzlichen hydraulischen Aufbau des fünften Ausführungsbeispiels. Eine analoge Umsetzung in einem anderen hydraulischen Aufbau / Ausführungsbeispiel ist möglich. Gemäß der beispielsgemäßen Anordnung wird nur ein einziges Rückschlagventil 6, also ein einziges Rückschlagventil 6 je Behälteranschluss 2, verwendet. Hierzu sind die Saugseiten 41 der Pumpen 50 über die Leitungsabschnitte 12b direkt (ohne ein Rückschlagventil) zusammengeschaltet und der gemeinsame Leitungsabschnitt ist über das Rückschlagventil 6 mit dem Behälteranschluss 2 verbunden. Anders ausgedrückt, wird dem Behälteranschluss 2 das Rückschlagventil 6 nachgeschaltet und erst danach wird hydraulisch auf die Pumpensaugeingänge 41 verzweigt. Beispielsgemäß ist auch hier (je Kreis) das Ventil 8 der Pumpe 50 und dem Rückschlagventil 6 parallel geschaltet.

Eine dem in Fig. 5 dargestellten Ausführungsbeispiel entsprechende Anordnung (mit Ventilen 8) ist auch vierkreisig mit vier Eingangsdruckanschlüssen 1, vier Ausgangsdruckanschlüssen 3 und vier Pumpen 50 möglich (analog zu dem in Fig. 4 dargestellten Ausführungsbeispiel). Eine dem fünften Ausführungsbeispiel entsprechende Anordnung ist auch analog zu der Fig. 3 mit zwei Behälteranschlüssen 2 möglich. Eine dem fünften Ausführungsbeispiel entsprechende Anordnung ist außerdem analog zu Fig. 1 ohne die Ventile 7 möglich.

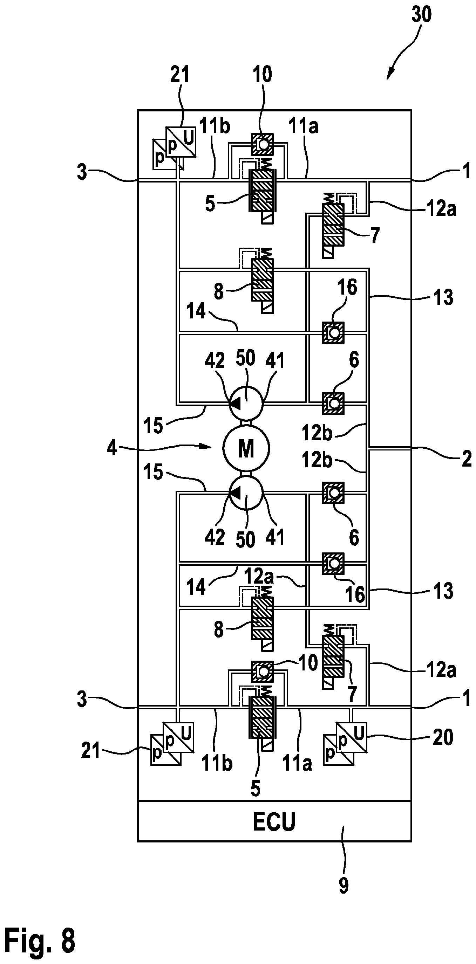

Das in Fig. 8 dargestellte siebte Ausführungsbeispiel einer erfindungsgemäßen Anordnung geht von dem fünften Ausführungsbeispiel (Fig. 5) aus. Zusätzlich ist je Kreis eine hydraulische Verbindung 14 vom Behälteranschluss 2 zum Ausgangsdruckanschluss 3 vorgesehen, in welcher sich ein in Richtung des Ausgangsdruckanschlusses 3 hin öffnendes, weiteres (zweites) Rückschlagventil 16 befindet. Auch hier werden vorzugsweise Rückschlagventile 16 mit einem sehr geringen Öffnungsdruck und minimaler Restleckage verwendet. Hierzu wären besonders Rückschlagventile mit Elastomer abgedichtetem Ventilsitz geeignet. Vorteilhaft an der in Fig. 8 dargestellten Verbindung 14 mit Rückschlagventil 16 ist es, dass diese Verbindung 14 mit einem geeigneten Rückschlagventil 16 einen Volumenfluss vom Behälteranschluss 2 zum Ausgangsdruckanschluss 3 mit geringem hydraulischem Widerstand ermöglicht. Dieser Vorteil ist beispielsweise von Nutzen bei einer beispielsgemäßen Bremsanlage wie in Fig. 9 dargestellt.

Eine dem in Fig. 8 dargestellten siebten Ausführungsbeispiel entsprechende Anordnung (d.h. mit Verbindung 14 mit zweitem Rückschlagventil 16) kann auch mit einer vierkreisigen Anordnung mit vier Eingangsdruckanschlüssen 1, vier Ausgangsdruckanschlüssen 3 und vier Pumpen 50 ausgeführt werden (analog zu dem Ausführungsbeispiel der Fig. 4). Eine dem siebten Ausführungsbeispiel entsprechende Anordnung ist auch analog zu der Fig. 3 mit zwei Behälteranschlüssen 2 möglich. Eine dem siebten Ausführungsbeispiel entsprechende Anordnung ist außerdem analog zu Fig. 1 ohne die Ventile 7 und 8 ebenfalls vorteilhaft.

In Fig. 7 ist ein erstes Ausführungsbeispiel einer erfindungsgemäßen Bremsanlage schematisch dargestellt. Die Bremsanlage stellt eine Simulator-Bremsanlage mit im Wesentlichen einem Hauptbremszylinder 100, welcher durch ein Bremspedal über eine Druckstange direkt betätigbar ist, einem dem Hauptbremszylinder 100 zugeordneten unter Atmosphärendruck stehenden Druckmittelvorratsbehälter 140, einer mit dem Hauptbremszylinder 100 zusammenwirkenden (Weg)Simulationseinrichtung 180, einer elektrisch steuerbaren Druckbereitstellungseinrichtung 190, einer elektrisch steuerbaren Druckmodulationseinrichtung 150 zum Einstellen radindividueller Bremsdrücke für die Radbremsen 151a-151d und einer ersten elektronischen Steuer- und Regeleinheit 146, welche zur Ansteuerung der Druckbereitstellungseinrichtung 190 und der Druckmodulationseinrichtung 150 ausgebildet ist, sowie mit einer elektrisch steuerbaren Pumpen-Ventil-Anordnung 130 als Zusatzmodul, der eine zweite elektronische Steuer- und Regeleinheit 9 zugeordnet ist.

Druckmodulationseinrichtung 150 umfasst radindividuelle Einlassventile 152a-152d und Auslassventile 153a-153d. Die Eingangsanschlüsse der Einlassventile 152a-152d werden mittels Bremskreisversorgungsleitungen I, II mit Drücken versorgt, die in einer ersten Betriebsart (z.B. "Brake-by-Wire") aus einem Systemdruck abgeleitet werden, der in einer an die Druckbereitstellungseinrichtung 190 angeschlossenen Systemdruckleitung 191 vorliegt. Die hydraulische Verbindung zwischen der Systemdruckleitung 191 und der Bremskreisversorgungsleitung I, II ist mittels eines, vorteilhafterweise stromlos geschlossenen, Zuschaltventils 182a, 182b je Bremskreis trennbar. In einer zweiten Betriebsart sind die Bremskreisversorgungsleitungen I, II über ein, vorteilhafterweise stromlos offenes, Trennventil 181a, 181b je Bremskreis mit dem zugeordneten Hauptbremszylinder-Druckraum 133, 134 verbunden. Die Ausgangsanschlüsse der Auslassventile 153a-153d sind über eine gemeinsame Rücklaufleitung 154 mit dem Druckmittelvorratsbehälter 140 verbunden.

Beispielsgemäß sind die Radbremsen 151a und 151b dem linken Vorderrad FL und dem rechten Hinterrad RR und der Bremskreisversorgungsleitung I sowie die Radbremsen 151c und 151d dem rechten Vorderrad FR und dem linken Hinterrad RL und der Bremskreisversorgungsleitung II zugeordnet. Andere Bremskreisaufteilungen sind denkbar.

Der zweikreisige Hauptbremszylinder 100 umfasst zwei hintereinander angeordnete Kolben 131, 132, die zwei hydraulische Druckräume 133, 134 begrenzen. Der erste Kolben 131 ist mechanisch mit dem Bremspedal gekoppelt und wird direkt vom Fahrzeugführer, ohne Zwischenschaltung eines Bremskraftverstärkers betätigt. Den Druckräumen 133, 134 sind Druckausgleichsleitungen 135a, 135b zum Druckmittelvorratsbehälter 140 zugeordnet. In der Druckausgleichsleitung 135a ist ein stromlos offenes (SO-) Diagnoseventil 184 enthalten.

Zur Erfassung einer Betätigung des Hauptbremszylinders 100 ist ein, vorteilhafterweise redundant ausgeführter, Wegsensor 138 vorgesehen, der z.B. eine Verschiebung des Kolben 131 und/oder 132 erfasst.

Ein Drucksensor 186 erfasst den im Druckraum 134 durch ein Verschieben des zweiten Kolbens 132 aufgebauten Druck.

Simulationseinrichtung 180 ist hydraulisch an den Hauptbremszylinder 100 ankoppelbar und besteht im Wesentlichen aus einer Simulatorkammer 188, einer Simulatorfederkammer 189 sowie einem die beiden Kammern voneinander trennenden Simulatorkolben 192. Simulatorkolben 192 stützt sich durch ein in Simulatorfederkammer 188 angeordnetes elastisches Element (z.B. eine Feder), welches vorteilhafterweise vorgespannt ist, am Gehäuse ab. Die Simulatorkammer 188 ist mittels eines elektrisch betätigbaren Simulatorfreigabeventils 193 mit dem Druckraum 133 des Hauptbremszylinders 100 verbindbar. Bei Vorgabe einer Pedalkraft und aktiviertem Simulatorfreigabeventil 193 strömt Druckmittel vom Hauptbremszylinderdruckraum 133 in die Simulatorkammer 188. Ein hydraulisch antiparallel zum Simulatorfreigabeventil 193 angeordnetes Rückschlagventil 194 ermöglicht unabhängig vom Schaltzustand des Simulatorfreigabeventils 193 ein weitgehend ungehindertes Zurückströmen des Druckmittels von der Simulatorkammer 188 zum Hauptbremszylinderdruckraum 133.

Die elektrisch steuerbare Druckbereitstellungseinrichtung 190 ist als eine hydraulische Zylinder-Kolben-Anordnung bzw. ein einkreisiger elektrohydraulischer Aktuator ausgebildet, dessen Kolben 195 von einem schematisch angedeuteten Elektromotor 196 unter Zwischenschaltung eines ebenfalls schematisch dargestellten Rotations-Translationsgetriebes betätigbar ist. Ein der Erfassung der Rotorlage des Elektromotors 196 dienender, lediglich schematisch angedeuteter Rotorlagensensor ist mit dem Bezugszeichen 197 bezeichnet. Zusätzlich kann auch ein Temperatursensor 198 zum Erfassen der Temperatur der Motorwicklung verwendet werden. Der Kolben 195 begrenzt einen Druckraum 199, welcher mit der Systemdruckleitung 191 verbunden ist. Ein Nachsaugen von Druckmittel in den Druckraum 199 ist durch ein Zurückfahren des Kolbens 195 bei geschlossenen Zuschaltventilen 182a, 182b möglich, indem Druckmittel aus dem Behälter 140 über eine Nachsaugleitung 135c mit einem in Strömungsrichtung zum Aktuator 190 öffnenden, nicht näher bezeichneten Rückschlagventil in den Akuatordruckraum 199 strömen kann. Zum Erfassen des in der Systemdruckleitung 191 herrschenden Druckes ist ein vorzugsweise redundant ausgeführter Drucksensor 187 vorgesehen.

Die beispielsgemäße Pumpen-Ventil-Anordnung 130 ist vierkreisig ausgeführt, d.h. die Anordnung umfasst vier Eingangsdruckanschlüsse 1 und jeweils einen zugeordneten Ausgangsdruckanschluss 3 und eine Pumpe 50. Pumpen-Ventil-Anordnung 130 ist hydraulisch den Einlassventilen 152a-152d nachgeschaltet, d.h. je Radbremskreis zwischen Einlassventil 152 und zugehörigem Radbremse 151 angeordnet. Pumpen-Ventil-Anordnung 130 besitzt nur einen einzigen Behälteranschluss 2.

Je (Rad)Kreis umfasst die Pumpen-Ventil-Anordnung 130 ein (erstes) Ventil 5 mit parallelem Rückschlagventil 10, ein (zweites) Ventil 7 und ein Auslassventil 8 entsprechend dem sechsten Ausführungsbeispiel der Fig. 6. Dabei sind alle Auslassventile 8 über eine gemeinsame hydraulische Verbindung 13 mit dem Behälteranschluss 2 verbunden. Für je zwei Radbremsen 151a, 151b bzw. 151c, 151c sind die Saugseiten 41 der zugehörigen Pumpen 50 über einen Leitungsabschnitte 12b zusammengeschaltet und über ein (erstes) Rückschlagventil 6 gemeinsam mit dem Behälteranschluss 2 verbunden (analog dem sechsten Ausführungsbeispiel der Fig. 6).

Die hydraulischen Komponenten der Bremsanlage sind beispielsgemäß in zwei hydraulischen Einheiten (Modulen) angeordnet, wobei die Pumpen-Ventil-Anordnung 130 eines der Module bildet. Jeder hydraulischen Einheit ist eine elektronische Steuer- und Regeleinheit 146, 9 zugeordnet.

Bevorzugt wird jeder der elektronischen Steuer- und Regeleinheiten 146, 9 von einer eigenen elektrischen Energieversorgung 201, 201 versorgt.

In Fig. 9 ist ein zweites Ausführungsbeispiel einer erfindungsgemäßen Bremsanlage schematisch dargestellt. Die Bremsanlage umfasst im Wesentlichen eine Bremsbetätigung 210 mit Hauptbremszylinder 100 und vorgeschaltetem Bremskraftverstärker 300, eine beispielsgemäße elektrisch steuerbare Pumpen-Ventil-Anordnung 230, der eine zweite elektronische Steuer- und Regeleinheit 9 zugeordnet ist, und ein konventionelles ESC-Modul 220 (elektrisch steuerbare Druckbereitstellungseinrichtung), dem eine erste elektronische Steuer- und Regeleinheit 146 zugeordnet ist. Hier ist die beispielsgemäße Anordnung 230 zwischen der Bremsbetätigung 210 und dem ESC-Modul 220 angeordnet, d.h. die Anordnung ist vor den Einlassventilen 152a-152d angeordnet.

Die Bremsbetätigung umfasst beispielsgemäß einen bremspedalbetätigbaren Hauptbremszylinder 100 mit Druckräumen 133 und 134, wobei jedem Druckraum zwei Radbremsen 151a, 151b bzw. 151c, 151d zugeordnet sind, und einen dem Hauptbremszylinder zugeordneten unter Atmosphärendruck stehenden Druckmittelvorratsbehälter 140.

Das ESC-Modul 220 umfasst ein zweikreisiges Motor-Pumpen-Aggregat 292 mit einem Niederdruckspeicher 291 und zwei elektrisch steuerbaren Ventilen 293, 294 je Kreis sowie eine elektrisch steuerbare Druckmodulationseinrichtung 150 mit einem Einlassventil 152a-152d und einem Auslassventil 153a-153d für jede Radbremse zum Einstellen radindividueller Bremsdrücke für die Radbremsen 151a-151d.

Die zweikreisig ausgeführte Pumpen-Ventil-Anordnung 230 entspricht der Anordnung des siebten Ausführungsbeispiels der Fig. 8.

Da das Pumpen-Ventil-Modul 230 zwischen der Bremsbetätigung 210 und dem konventionellen ESC-Modul 220 angeordnet ist, muss die Pumpe des ESC-Moduls beispielsweise für ESC- oder TCS-Bremsregeleingriffe Druckmittelvolumen über die Betätigung 210 bzw. 100 aus dem Behälter 140 an. Hierbei ist ein möglichst geringer hydraulischer Widerstand von Vorteil, denn je geringer der hydraulische Widerstand für die Pumpe beim Ansaugen ist, desto schneller kann diese Druckmittel fördern und somit Bremsdruck aufbauen.

Beim Ansaugen der ESC-Pumpe entweder durch die Betätigung und zusätzlich durch das SO-Analogventil 5 des Pumpen-Ventil-Moduls 230 oder durch die Pumpe und das vorgeschaltete Rückschlagventil des Pumpen-Ventil-Anordnung müssen ggf. zu hohe hydraulische Widerstände durchströmt werden, was zu einer Drosselwirkung für den Volumenstrom des ESC-Pumpen-Druckaufbaus führen kann. Bei einem ESC-Bremsregeleingriff beispielsweise könnte dies zu Problemen führen, wenn der Druck nicht schnell genug aufgebaut werden kann. Daher ist eine Verbindung 14, in welcher sich nur ein geeignetes Rückschlagventil 16 und somit ein geringer hydraulischer Widerstand befindet, welche direkt den Behälteranschluss 2 mit dem Druckabgang 3 verbindet, vorteilhaft.

In elektrisch verstärkten Bremsanlagen ist darauf zu achten, dass eine ausreichende Verfügbarkeit gegeben ist. Eine hohe Verfügbarkeit wird bevorzugt dadurch erreicht, dass die Bremsanlage aus mindestens zwei voneinander unabhängigen elektrischen Energiequellen 201, 202 versorgt wird. Weiterhin werden bevorzugt die durch mögliche Ausfälle gefährdeten Komponenten wie ECUs (ECU: elektronische Steuer- und Regeleinheit) und Aktuatoren (insbesondere elektrisch ansteuerbare Druckquelle) mehrfach ausgeführt.

Bevorzugt übernimmt ein an sich bekanntes Hauptbremssystem den Systemdruckaufbau in einem normalen Bremsbetrieb und eine erfindungsgemäße Anordnung (ein erfindungsgemäßes Pumpen-Ventil-Modul) ist für den Fall vorgesehen, dass die Systemdruckbereitstellungsfunktion des Hauptbremssystems ausgefallen ist. In dieser Situation übernimmt das Pumpen-Ventil-Modul den Druckaufbau. Das Pumpen-Ventil-Modul kann sowohl eine Fahrerbremsung hydraulisch verstärken als auch einen fahrerunabhängigen Druck aufbauen.

## Patentansprüche

1. Bremsanlage für ein Kraftfahrzeug zur Betätigung von hydraulisch betätigbaren Radbremsen (151a-151d), mit
• einem bremspedalbetätigbaren Hauptbremszylinder (100) mit Druckräumen (133, 134), wobei jedem Druckraum zumindest eine Radbremse (151a, 151b; 151c, 151d) zugeordnet ist,
• einem dem Hauptbremszylinder zugeordneten unter Atmosphärendruck stehenden Druckmittelvorratsbehälter (140),
• einer elektrisch steuerbaren Druckmodulationseinrichtung (150) zum Einstellen radindividueller Bremsdrücke mit zumindest einem Einlassventil (152a-152d) und einem Auslassventil (153a-153d) für jede Radbremse (151a-151d), und
• einer elektrisch steuerbaren Druckbereitstellungseinrichtung (190, 290),
wobei diese eine Anordnung (30, 130, 230) mit einem Eingangsdruckanschluss (1), welcher mit dem Hauptbremszylinder verbunden ist, einem Behälteranschluss (2), welcher mit dem Druckmittelvorratsbehälter verbunden ist, und einem Ausgangsdruckanschluss (3), welcher mit einer der Radbremsen verbunden ist, umfasst, wobei die Anordnung
• eine hydraulische Verbindung (11a, 11b) zwischen dem Eingangsdruckanschluss (1) und dem Ausgangsdruckanschluss (3), in welcher ein stromlos offen ausgeführtes, analog ansteuerbares, erstes Ventil (5) angeordnet ist, und
• eine Pumpenanordnung (4, 40) mit zumindest einer Pumpe (50) mit einer Saugseite (41), welche mit dem Eingangsdruckanschluss (1) verbunden oder verbindbar ist (12a), und einer Druckseite (42), welche mit dem Ausgangsdruckanschluss (3) verbunden oder verbindbar ist (15),
umfasst,
**dadurch gekennzeichnet, dass** die Saugseite (41) der Pumpe mit dem Behälteranschluss (2) verbunden ist, wobei in der Verbindung (12b) ein in Richtung der Saugseite (41) hin öffnendes, erstes Rückschlagventil (6) angeordnet ist.

2. Bremsanlage nach Anspruch 1, **dadurch gekennzeichnet, dass** die Volumenabgabeseite des ersten Rückschlagventils (6) mit der hydraulischen Verbindung (12a) zwischen der Saugseite (41) und dem Eingangsdruckanschluss (1) verbunden ist.

3. Bremsanlage nach Anspruch 1 oder 2, **dadurch gekennzeichnet, dass** in der hydraulischen Verbindung (12a) zwischen der Saugseite (41) und dem Eingangsdruckanschluss (1) kein Ventil angeordnet ist.

4. Bremsanlage nach Anspruch 1 oder 2, **dadurch gekennzeichnet, dass** in der hydraulischen Verbindung (12a) zwischen der Saugseite (41) und dem Eingangsdruckanschluss (1), insbesondere lediglich, ein stromlos geschlossen ausgeführtes zweites Ventil (7) angeordnet ist.

5. Bremsanlage nach einem der Ansprüche 1 bis 4, **dadurch gekennzeichnet, dass** eine hydraulische Verbindung (13) zwischen dem Ausgangsdruckanschluss (3) und dem Behälteranschluss (2) vorgesehen ist, in welcher ein stromlos geschlossen ausgeführtes, drittes Ventil (8) angeordnet ist.

6. Bremsanlage nach einem der Ansprüche 1 bis 5, **dadurch gekennzeichnet, dass** eine hydraulische Verbindung (14) zwischen dem Ausgangsdruckanschluss (3) und dem Behälteranschluss (2) vorgesehen ist, in welcher ein in Richtung des Ausgangsdruckanschlusses (3) hin öffnendes, zweites Rückschlagventil (16) angeordnet ist.

7. Bremsanlage nach einem der Ansprüche 1 bis 6, **dadurch gekennzeichnet, dass** die Anordnung mehrkreisig ausgeführt ist und für jeden Kreis einen Eingangsdruckanschluss (1), einen Ausgangsdruckanschluss (3), eine Pumpe (50) mit Saugseite (41), welche mit dem Eingangsdruckanschluss (1) verbunden oder verbindbar ist (12a), und Druckseite (42), welche mit dem Ausgangsdruckanschluss (3) verbunden oder verbindbar ist (15), und ein zwischen Eingangsdruckanschluss (1) und Ausgangsdruckanschluss (3) angeordnetes, stromlos offen ausgeführtes, analog ansteuerbares, erstes Ventil (5) umfasst.

8. Bremsanlage nach Anspruch 7, **dadurch gekennzeichnet, dass** die Anordnung lediglich den einen Behälteranschluss (2) umfasst, wobei die Saugseiten (41) der Pumpen (50) mit dem Behälteranschluss (2) verbunden sind.

9. Bremsanlage nach Anspruch 8, **dadurch gekennzeichnet, dass** die Anordnung für jeden Kreis ein zwischen Saugseite (41) der Pumpe und dem Behälteranschluss (2) angeordnetes erstes Rückschlagventil (6) umfasst.

10. Bremsanlage nach Anspruch 8, **dadurch gekennzeichnet, dass** zwei oder mehr Saugseiten (41) gemeinsam über ein erstes Rückschlagventil (6) mit dem Behälteranschluss (2) verbunden sind.

11. Bremsanlage nach Anspruch 7, **dadurch gekennzeichnet, dass** die Anordnung für jeden Kreis einen Behälteranschluss (2) und ein zwischen der Saugseite (41) der Pumpe (50) und dem Behälteranschluss (2) angeordnetes erstes Rückschlagventil (6) umfasst oder dass diese zumindest zwei Behälteranschlüsse (2) umfasst, wobei zumindest einer, insbesondere jeder, der Behälteranschlüsse (2) mit den Saugseiten (41) von zumindest zwei Pumpen (50) verbunden ist.

12. Bremsanlage nach einem der Ansprüche 7 bis 11, **dadurch gekennzeichnet, dass** zumindest eine erste Druckerfassungseinrichtung (20), welche den Druck an einem der Eingangsdruckanschlüsse (1) erfasst, und insbesondere eine zweite Druckerfassungseinrichtung (21), welche den Druck an einem der Ausgangsdruckanschlüsse (3) erfasst, vorgesehen ist.

13. Bremsanlage nach einem der Ansprüche 1 bis 12, **dadurch gekennzeichnet, dass** die hydraulischen Komponenten der Anordnung als eine selbständige Baugruppe ausgeführt sind, wobei der Baugruppe eine elektronische Steuer- und Regeleinheit (9) zugeordnet ist, welche insbesondere an der Baugruppe angeordnet ist.

14. Bremsanlage nach einem der Ansprüche 1 bis 13, **dadurch gekennzeichnet, dass** der oder jeder Eingangsdruckanschluss (1) der Anordnung (230), insbesondere ohne Zwischenschaltung eines Ventils, mit dem Hauptbremszylinder (100) verbunden ist, und dass der oder jeder Ausgangsdruckanschluss (3) der Anordnung mit der Druckbereitstellungseinrichtung (290) verbunden ist, wobei insbesondere die Druckbereitstellungseinrichtung (290) eine Pumpe und Ventile, und insbesondere einen Niederdruckspeicher, umfasst.

15. Bremsanlage nach einem der Ansprüche 1 bis 13, **dadurch gekennzeichnet, dass** der oder jeder Eingangsdruckanschluss (1) der Anordnung (130), insbesondere ohne Zwischenschaltung eines Ventils, mit der Druckmodulationseinrichtung (150) verbunden ist, und dass der oder jeder Ausgangsdruckanschluss (3) der Anordnung, insbesondere ohne Zwischenschaltung eines Ventils, mit einer der Radbremsen (151a-151d) verbunden ist.

16. Bremsanlage nach einem der Ansprüche 1 bis 15, **dadurch gekennzeichnet, dass** eine erste, der Druckbereitstellungseinrichtung (190, 290) und der Druckmodulationseinrichtung (150) zugeordnete elektronische Steuer- und Regeleinheit (146) und eine zweite, der Anordnung (130, 230) zugeordnete elektronische Steuer- und Regeleinheit (9) vorgesehen sind.

## Claims

1. Brake system for a motor vehicle for the actuation of hydraulically actuable wheel brakes (151a-151d), with
• a brake master cylinder (100) which can be actuated by way of brake pedal and has pressure spaces (133, 134), each pressure space being assigned at least one wheel brake (151a, 151b; 151c, 151d),
• a pressure medium storage vessel (140) which is under atmospheric pressure and is assigned to the brake master cylinder,
• an electrically controllable pressure modulation device (150) for the setting of wheel-individual brake pressures with at least one inlet valve (152a-152d) and one outlet valve (153a-153d) for each wheel brake (151a-151d), and
• an electrically controllable pressure provision device (190, 290),
the said brake system comprising an arrangement (30, 130, 230) with an inlet pressure connector (1) which is connected to the brake master cylinder, a vessel connector (2) which is connected to the pressure medium storage vessel, and an outlet pressure connector (3) which is connected to one of the wheel brakes, the arrangement comprising
• a hydraulic connection (11a, 11b) between the inlet pressure connector (1) and the outlet pressure connector (3), in which hydraulic connection (11a, 11b) a first valve (5) which is of normally open configuration and can be actuated in an analogue manner is arranged, and
• a pump arrangement (4, 40) with at least one pump (50) with a suction side (41) which is connected or can be connected (12a) to the inlet pressure connector (1), and a pressure side (42) which is connected or can be connected (15) to the outlet pressure connector (3),
**characterized in that** the suction side (41) of the pump is connected to the vessel connector (2), a first check valve (6) which opens in the direction of the suction side (41) being arranged in the connection (12b).

2. Brake system according to Claim 1, **characterized in that** the volume discharge side of the first check valve (6) is connected to the hydraulic connection (12a) between the suction side (41) and the inlet pressure connector (1).

3. Brake system according to Claim 1 or 2, **characterized in that** no valve is arranged in the hydraulic connection (12a) between the suction side (41) and the inlet pressure connector (1).

4. Brake system according to Claim 1 or 2, **characterized in that** (in particular, solely) a second valve (7) of normally closed configuration is arranged in the hydraulic connection (12a) between the suction side (41) and the inlet pressure connector (1).

5. Brake system according to one of Claims 1 to 4, **characterized in that** a hydraulic connection (13) is provided between the outlet pressure connector (3) and the vessel connector (2), in which hydraulic connection (13) a third valve (8) of normally closed configuration is arranged.

6. Brake system according to one of Claims 1 to 5, **characterized in that** a hydraulic connection (14) is provided between the outlet pressure connector (3) and the vessel connector (2), in which hydraulic connection (14) a second check valve (16) which opens in the direction of the outlet pressure connector (3) is arranged.

7. Brake system according to one of Claims 1 to 6, **characterized in that** the arrangement is of multiple-circuit configuration and comprises, for each circuit, an inlet pressure connector (1), an outlet pressure connector (3), a pump (50) with a suction side (41) which is connected or can be connected (12a) to the inlet pressure connector (1) and with a pressure side (42) which is connected or can be connected (15) to the outlet pressure connector (3), and a first valve (5) which is arranged between the inlet pressure connector (1) and the outlet pressure connector (3), is of normally open configuration, and can be actuated in an analogue manner.

8. Brake system according to Claim 7, **characterized in that** the arrangement comprises solely the one vessel connector (2), the suction sides (41) of the pumps (50) being connected to the vessel connector (2).

9. Brake system according to Claim 8, **characterized in that** the arrangement comprises, for each circuit, a first check valve (6) which is arranged between the suction side (41) of the pump and the vessel connector (2).

10. Brake system according to Claim 8, **characterized in that** two or more suction sides (41) are connected jointly via a first check valve (6) to the vessel connector (2).

11. Brake system according to Claim 7, **characterized in that** the arrangement comprises, for each circuit, a vessel connector (2) and a first check valve (6) which is arranged between the suction side (41) of the pump (50) and the vessel connector (2), or **in that** the said arrangement comprises the said at least two vessel connectors (2), at least one (in particular, every one) of the vessel connectors (2) being connected to the suction sides (41) of at least two pumps (50).

12. Brake system according to one of Claims 7 to 11, **characterized in that** at least a first pressure detection device (20) which detects the pressure at one of the inlet pressure connectors (1) and, in particular, a second pressure detection device (21) which measures the pressure at one of the outlet pressure connectors (3) are provided.

13. Brake system according to one of Claims 1 to 12, **characterized in that** the hydraulic components of the arrangement are configured as an independent assembly, the assembly being assigned an electronic control and regulating unit (9) which is arranged, in particular, on the assembly.

14. Brake system according to one of Claims 1 to 13, **characterized in that** the or each inlet pressure connector (1) of the arrangement (230) is connected to the brake master cylinder (100), in particular without a valve being connected in between, and **in that** the or each outlet pressure connector (3) of the arrangement is connected to the pressure provision device (290), the pressure provision device (290) comprising, in particular, a pump and valves, and, in particular, a low pressure accumulator.

15. Brake system according to one of Claims 1 to 13, **characterized in that** the or each inlet pressure connector (1) of the arrangement (130) is connected to the pressure modulation device (150), in particular without a valve being connected in between, and **in that** the or each outlet pressure connector (3) of the arrangement is connected to one of the wheel brakes (151a-151d), in particular without a valve being connected in between.

16. Brake system according to one of Claims 1 to 15, **characterized in that** a first electronic control and regulating unit (146) which is assigned to the pressure provision device (190, 290) and the pressure modulation device (150), and a second electronic control and regulating unit (9) which is assigned to the arrangement (130, 230) are provided.

## Revendications

1. Système de freinage pour un véhicule automobile destiné à actionner des freins de roue à commande hydraulique (151a-151d), comprenant
• un maître-cylindre (100) pouvant être commandé par la pédale de frein et doté de chambres de pression (133, 134), chaque chambre de pression étant associée à au moins un frein de roue (151a, 151b ; 151c, 151d),
• un réservoir de stockage de fluide sous pression (140) associé au maître-cylindre et à la pression atmosphérique,
• un dispositif de modulation de pression (150) pouvant être commandé électriquement pour régler des pressions de frein spécifiques à la roue avec au moins une soupape d'admission (152a-152d) et une soupape de sortie (153a-153d) pour chaque frein de roue (151a-151d), et
• un dispositif de fourniture de pression (190, 290) pouvant être commandé électriquement,
le système comprenant un agencement (30, 130, 230) doté d'un raccord de pression d'entrée (1) qui est relié au maître-cylindre, d'un raccord de réservoir (2) qui est relié au réservoir de stockage de fluide sous pression, et d'un raccord de pression de sortie (3) qui est relié à l'un des freins de roue, l'agencement comprenant
• un raccordement hydraulique (11a, 11b) entre le raccord de pression d'entrée (1) et le raccord de pression de sortie (3) dans lequel est disposée une première soupape (5) à commande analogique et réalisée ouverte sans tension, et
• un agencement de pompe (4, 40) avec au moins une pompe (50) ayant un côté aspiration (41) qui est ou peut être relié (12a) au raccord de pression d'entrée (1), et un côté pression (42) qui est ou peut être relié (15) au raccord de pression de sortie (3),
**caractérisé en ce que** le côté aspiration (41) de la pompe est relié au raccord de réservoir (2), un premier clapet antiretour (6) s'ouvrant vers le côté aspiration (41) étant disposé dans le raccordement (12b).

2. Système de freinage selon la revendication 1, **caractérisé en ce que** le côté de distribution de volume du premier clapet antiretour (6) est relié au raccordement hydraulique (12a) entre le côté aspiration (41) et le raccord de pression d'entrée (1).

3. Système de freinage selon la revendication 1 ou 2, **caractérisé en ce qu'**aucune soupape n'est disposée dans le raccordement hydraulique (12a) entre le côté aspiration (41) et le raccord de pression d'entrée (1).

4. Système de freinage selon la revendication 1 ou 2, **caractérisé en ce qu'**une, en particulier une seule, deuxième soupape (7) réalisée fermée sans tension est disposée dans le raccordement hydraulique (12a) entre le côté aspiration (41) et le raccord de pression d'entrée (1).

5. Système de freinage selon l'une quelconque des revendications 1 à 4, **caractérisé en ce qu'**un raccordement hydraulique (13) est prévu entre le raccord de pression de sortie (3) et le raccord de réservoir (2) dans lequel est disposée une troisième soupape (8) réalisée fermée sans tension.

6. Système de freinage selon l'une quelconque des revendications 1 à 5, **caractérisé en ce qu'**un raccordement hydraulique (14) est prévu entre le raccord de pression de sortie (3) et le raccord de réservoir (2) dans lequel est disposé un deuxième clapet antiretour (16) s'ouvrant vers le raccord de pression de sortie.

7. Système de freinage selon l'une quelconque des revendications 1 à 6, **caractérisé en ce que** l'agencement est réalisé en plusieurs cercles et comprend pour chaque cercle un raccord de pression d'entrée (1), un raccord de pression de sortie (3), une pompe (50) ayant un côté aspiration (41) qui est ou peut être relié (12a) au raccord de pression d'entrée (1), et un côté pression (42) qui est ou peut être relié (15) au raccord de pression de sortie (3), et une première soupape (5) à commande analogique, réalisée ouverte sans tension, et disposée entre le raccord de pression d'entrée (1) et le raccord de pression de sortie (3).

8. Système de freinage selon la revendication 7, **caractérisé en ce que** l'agencement ne comprend que ledit un raccord de réservoir (2), les côtés aspiration (41) des pompes (50) étant reliés au raccord de réservoir (2).

9. Système de freinage selon la revendication 8, **caractérisé en ce que** l'agencement comprend pour chaque cercle un premier clapet antiretour (6) disposé entre le côté aspiration (41) de la pompe et le raccord de réservoir (2).

10. Système de freinage selon la revendication 8, **caractérisé en ce que** deux ou plusieurs côtés aspiration (41) sont reliés ensemble au raccord de réservoir (2) par un premier clapet antiretour (6).

11. Système de freinage selon la revendication 7, **caractérisé en ce que** l'agencement comprend pour chaque cercle un raccord de réservoir (2) et un premier clapet antiretour (6) disposé entre le côté aspiration (41) de la pompe (50) et le raccord de réservoir (2), ou **en ce qu'**il comprend au moins deux raccords de réservoir (2), au moins un, en particulier chacun, des raccords de réservoir (2) étant relié aux côtés aspiration (41) d'au moins deux pompes (50).

12. Système de freinage selon l'une quelconque des revendications 7 à 11, **caractérisé en ce qu'**au moins un premier dispositif de détection de pression (20) qui détecte la pression à l'un des raccords de pression d'entrée (1), et en particulier un deuxième dispositif de détection de pression (21) qui détecte la pression à l'un des raccords de pression de sortie (3), sont prévus.

13. Système de freinage selon l'une quelconque des revendications 1 à 12, **caractérisé en ce que** les composants hydrauliques de l'agencement sont réalisés comme un sous-ensemble autonome, le sous-ensemble étant associé à une unité de commande et de régulation électronique (9) qui est disposée en particulier sur le sous-ensemble.

14. Système de freinage selon l'une quelconque des revendications 1 à 13, **caractérisé en ce que** le ou chaque raccord de pression d'entrée (1) de l'agencement (230) est relié au maître-cylindre (100), en particulier sans interposition de soupape, et **en ce que** le ou chaque raccord de pression de sortie (3) de l'agencement est relié au dispositif de fourniture de pression, dans lequel en particulier le dispositif de fourniture de pression (290) comprend une pompe et des soupapes, et en particulier un accumulateur basse pression.

15. Système de freinage selon l'une quelconque des revendications 1 à 13, **caractérisé en ce que** le ou chaque raccord de pression d'entrée (1) de l'agencement (130) est relié au dispositif de modulation de pression (150), en particulier sans interposition de soupape, et **en ce que** le ou chaque raccord de pression de sortie (3) de l'agencement est relié à l'un des freins de roue (151a-151d), en particulier sans interposition de soupape.

16. Système de freinage selon l'une quelconque des revendications 1 à 15, **caractérisé en ce qu'**une première unité de commande et de régulation électronique (146) associée au dispositif de fourniture de pression (190, 290) et au dispositif de modulation de pression (150) et une deuxième unité de commande et de régulation électronique (9) associée à l'agencement (130, 230) sont prévues.
